# EUROPEAN PATENT APPLICATION

(11) **EP 4 765 560 A1**
(43) Date of publication of application: **24.06.2026**
(21) Application number: 24893335.0
(22) Date of filing: 15.11.2024
(51) Int. Cl.: H02J 7/00, H01M 10/615, B60L 58/27

(54) **ENERGY CONVERSION DEVICE, INVERTER DEVICE, AND ENERGY CONVERSION SYSTEM**

(30) Priority: 24.11.2023 CN 202311589105
(71) Applicant: Nanjing Chervon Industry Co., Ltd., Nanjing, Jiangsu 211106 (CN)
(72) Inventor: XIAO, Yiwen, Nanjing, Jiangsu 211106 (CN)
(74) Representative: Sun, Yiming
(86) International application number: PCT/CN2024/132169
(87) International publication number: WO 2025/108177

(57) **Abstract**

The present disclosure provides an energy conversion device, an inversion device, and an energy conversion system. The energy conversion device includes: a first transmission port including a battery connection terminal adapted to be connected to a battery pack; a second transmission port at least connected to an alternating-current (AC) power grid; an energy conversion circuit that at least convert electric energy input from the first transmission port and then feed power to the second transmission port; and a controller at least in communication with the first transmission port, and electrically connected to the energy conversion circuit, where the controller is configured to at least control, when a temperature of the battery pack is less than or equal to a temperature threshold, the energy conversion circuit to convert the electric energy input from the first transmission port, such that the battery pack obtains at least heating energy.

## Description

The present disclosure claims priority to Chinese Patent Application No. 202311589105.0, filed with the China National Intellectual Property Administration (CNIPA) on November 24, 2023, which is incorporated herein by reference in its entirety.

### TECHNICAL FIELD

The present disclosure relates to a low-temperature treatment technology for an energy device, and in particular, to an energy conversion device, an inversion device, and an energy conversion system.

### BACKGROUND

With the development of battery technologies, direct-current (DC) electric power tools have gradually replaced engine-driven tools. Batteries serve as a power source for such DC electric power tools, and their performance directly affects the operating performance of the tools. Particularly, the power characteristics, cycle life, and available capacity of lithium-ion batteries deteriorate at low temperatures, thereby affecting the usage experience of the electric power tools in winter. Moreover, at low temperatures, lithium-ion batteries are difficult to charge and prone to lithium plating and other safety issues during DC charging.

This part provides background information related to the present application, and the background information is not necessarily existing art.

### SUMMARY

An objective of the present disclosure is to solve or at least alleviate part or all of the preceding problems. In view of this, an objective of the present disclosure is to provide an energy conversion device capable of heating a battery pack at a low temperature.

To achieve the above objective, the present disclosure adopts the following technical solutions:
An energy conversion device includes at least: a first transmission port that includes a battery connection terminal adapted to be connected to a battery pack; a second transmission port that is configured to be at least connected to an alternating-current (AC) power grid; an energy conversion circuit that is configured to at least perform energy conversion on the electric energy input from the first transmission port and then feed power to the second transmission port; and a controller that is at least in communication with the first transmission port, and electrically connected to the energy conversion circuit, where the controller is configured to at least control, when a temperature of the battery pack is less than or equal to a temperature threshold, the energy conversion circuit to convert the electric energy input from the first transmission port, such that the battery pack obtains at least heating energy.

In some embodiments, the energy conversion circuit includes: an inversion circuit that is configured to at least invert the electric energy input from the first transmission port and feed power to the AC power grid when the temperature of the battery pack is less than or equal to the temperature threshold.

In some embodiments, the inversion circuit is further configured to convert electric energy input from the second transmission port and then charge the battery pack.

In some embodiments, the energy conversion circuit includes: a heating circuit that is at least electrically coupled to the first transmission port; and the controller is configured to control the heating circuit to operate in a first operating mode when the temperature of the battery pack is less than or equal to the temperature threshold, such that the battery pack obtains at least the heating energy.

In some embodiments, the heating circuit includes a plurality of switching elements; and the controller is configured to control on-states of the plurality of switching elements in the first operating mode, so as to change a transmission direction of electric energy at the first transmission port at least twice.

In some embodiments, the heating circuit further includes an energy storage element; and the energy storage element is configured to store electric energy released by the battery pack, and transmit stored electric energy to the battery pack.

In some embodiments, the controller is configured to at least control, when the temperature of the battery pack is greater than the temperature threshold, the energy conversion circuit to convert electric energy input from the second transmission port, so as to charge the battery pack.

In some embodiments, the controller is configured to control the heating circuit to operate in a second operating mode when the temperature of the battery pack is greater than the temperature threshold, such that the battery pack obtains charging electric energy.

An energy conversion system includes a battery pack, an AC power grid, and an energy conversion device, where the battery pack is configured to be coupled to an electric power tool to supply power to the electric power tool; the energy conversion device is configured to be connected to the battery pack and the AC power grid, convert electric energy input from the battery pack, and feed power to the AC power grid; and when a temperature of the battery pack is less than or equal to a temperature threshold, the energy conversion device converts the electric energy input from the battery pack, such that the battery pack obtains at least heating energy.

In some embodiments, when the temperature of the battery pack is less than or equal to the temperature threshold, the energy conversion device converts the electric energy input from the battery pack and then feeds power to the AC power grid, such that the battery pack obtains the heating energy.

In some embodiments, when the temperature of the battery pack is less than or equal to the temperature threshold, the energy conversion device changes a transmission direction of electric energy between the battery pack and the energy conversion device at least twice, such that the battery pack obtains the heating energy.

An inversion device includes at least: a first transmission port that includes a battery connection terminal adapted to be connected to a battery pack; a second transmission port that is configured to be at least connected to an AC power grid; an inversion circuit that is disposed between the first transmission port and the second transmission port, and has a plurality of operating modes; a heating circuit that is disposed between the first transmission port and the inversion circuit, and has a plurality of operating modes; and a controller that is at least electrically connected to the inversion circuit and the heating circuit, where the controller is configured to control, when a temperature of the battery pack is less than or equal to a temperature threshold, the inversion circuit and/or the heating circuit to convert the electric energy input from the first transmission port, such that the battery pack obtains at least heating energy.

In some embodiments, when the temperature of the battery pack is less than or equal to the temperature threshold, the heating circuit operates in a first operating mode, and the inversion circuit is in an off-state, such that the battery pack can obtain the heating energy.

In some embodiments, when the temperature of the battery pack is greater than the temperature threshold, the heating circuit operates in a second operating mode, and the inversion circuit has at least a rectification mode, such that the battery pack obtains charging electric energy.

In some embodiments, when the temperature of the battery pack is less than or equal to the temperature threshold, the heating circuit operates in a third operating mode, and the inversion circuit has at least an inversion mode, such that the battery pack can feed power to the AC power grid.

An energy conversion device includes a DC/DC charger, where the DC/DC charger includes one side connected to one battery pack, and another side connected to another battery pack; a temperature detection module capable of detecting a temperature of a battery pack connected to the temperature detection module is disposed in the DC/DC charger; when a temperature of the battery pack is less than or equal to a temperature threshold, the battery pack on the one side of the DC/DC charger may be discharged, and the battery pack on the another side may be charged; and the operation is reversed after a preset time.

In some embodiments, types of battery packs respectively connected to two sides of the DC/DC charger are the same.

In some embodiments, types of battery packs respectively connected to two sides of the DC/DC charger are different.

### BRIEF DESCRIPTION OF THE DRAWINGS

FIG. 1 is a schematic diagram of an energy conversion system according to an embodiment of the present disclosure;
FIG. 2 is a schematic diagram of an internal circuit structure of an energy conversion device according to an embodiment of the present disclosure;
FIG. 3 is a schematic diagram of an internal circuit structure of an energy conversion device according to an embodiment of the present disclosure;
FIGS. 4a to 4d are schematic diagrams of circuit transformations of an energy conversion device for heating a battery pack in a mode according to an embodiment of the present disclosure;
FIGS. 5a to 5h are schematic diagrams of circuit transformations of an energy conversion device for heating a battery pack in another mode according to an embodiment of the present disclosure;
FIGS. 5i to 5p are schematic diagrams of circuit transformations of an energy conversion device for charging a battery pack in a mode according to an embodiment of the present disclosure;
FIG. 6 is a schematic block diagram of mutual heating between battery packs according to an embodiment of the present disclosure;
FIG. 7 is a schematic circuit diagram of a charger for implementing mutual heating between battery packs according to an embodiment of the present disclosure; and
FIG. 8 is a schematic diagram of some electric power tools using a battery pack according to an embodiment of the present disclosure.

### DETAILED DESCRIPTION OF THE EMBODIMENTS

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

In the present disclosure, an energy conversion device 10 may also be referred to as a bidirectional power supply device, a bidirectional inverter, an inversion device, an adapter, a charger, or the like. In an embodiment, the energy conversion device 10 includes at least a first transmission port 101 connected to a battery connection terminal of a battery pack 20, and a second transmission port 102 connected to an AC power grid 30. In other embodiments, the energy conversion device 10 may further include a third transmission port capable of being connected to an electric power tool.

In an embodiment, the energy conversion device 10 may serve as the charger to convert AC power provided by the AC power grid 30 and then charge the battery pack 20. The conversion herein may include rectification, filtering, boosting, bucking, or the like. In an embodiment, the energy conversion device 10 may serve as the inverter to convert electric energy input from the battery pack 10 and then feed power to the AC power grid 30. The energy conversion herein may include inversion, filtering, boosting, bucking, or the like. In an embodiment, the energy conversion device 10 may further serve as the adapter to supply electric energy provided by the battery pack 20 to an AC electric power tool, or convert electric energy provided by the AC power grid 30 and then supply power to a DC electric power tool.

In this embodiment, the AC power grid 30 may include standard-voltage power grids of various countries with a voltage greater than or equal to 100 V and less than or equal to 600 V. For example, it may be an AC power grid of approximately 110 V, an AC power grid of approximately 220 V, an AC power grid of approximately 240 V, or an AC power grid of approximately 380 V, which are not listed one by one herein. In other embodiments, the AC power grid 30 may further include a photovoltaic power grid, i.e., a power grid that generates power by solar energy.

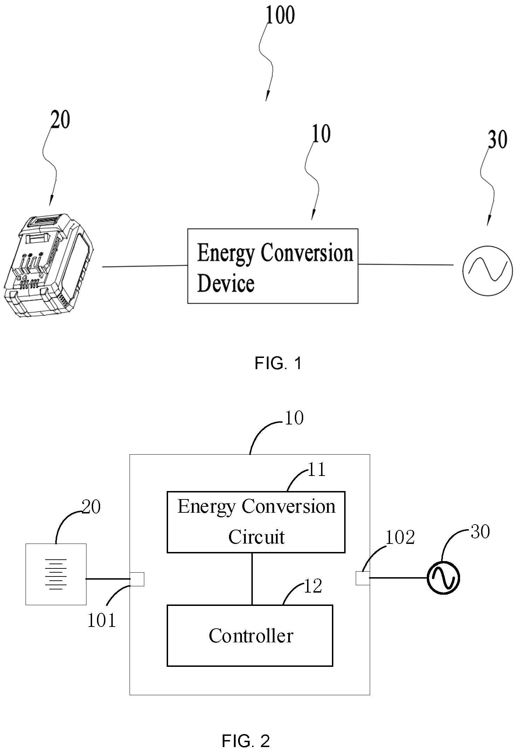

In an embodiment, the energy conversion device 10, the battery pack 20, and the AC power grid 30 may constitute energy conversion system 100 shown in FIG. 1.

In this embodiment, after the battery pack 20 is connected to the energy conversion device 10 through the first transmission port 101, it can transmit not only electric energy but also communication data to the energy conversion device 10. The communication data includes at least a temperature of the battery pack 20, such as a temperature around a cell in the battery pack 20, a temperature in the battery pack 20, an internal temperature of the cell in the battery pack 20, or an ambient temperature around the battery pack 20. The energy conversion device 10 may at least change its internal energy conversion manner or energy conversion process according to temperature data transmitted by the battery pack 20.

Referring to FIG. 2, the energy conversion device 10 may include at least an energy conversion circuit 11, and a controller 12 configured to control an operating state of the energy conversion circuit 11. In this embodiment, the controller 12 may be at least in communication with the first transmission port 101 to receive the communication data transmitted by the battery pack 20 through the first transmission port 101.

When the controller 12 determines that the temperature of the battery pack 20 is less than or equal to a temperature threshold, the battery pack 20 may be considered to be in a low-temperature environment. In this case, any charge or discharge operation on the battery pack 20 may result in low-temperature charging difficulties, degraded battery cycle life, or other safety issues.

To avoid the above problems, the controller 12 may control a circuit state of the energy conversion circuit 11 according to the temperature of the battery pack 20, so as to at least prevent the battery pack 20 from being charged or discharged. In this embodiment, the controller 12 may further control the energy conversion circuit 11 to convert electric energy input from the first transmission port 101 according to the temperature of the battery pack 20, such that the battery pack 20 can obtain at least heating energy. That is, the energy conversion device 10 can heat the battery pack 20 via energy conversion at least when the temperature of the battery pack 20 is relatively low, such as lower than the temperature threshold.

In an embodiment, the energy conversion circuit 11 includes at least an inversion circuit 111. The inversion circuit 111 is disposed between the first transmission port 101 and the second transmission port 102. The inversion circuit 111 can have a plurality of operating modes, such that the energy conversion device 10 has a plurality of energy conversion states.

In an implementation, the controller 12 can control the inversion circuit 111 to operate in an inversion mode when the temperature of the battery pack 20 is less than or equal to the temperature threshold, such that the energy conversion device 10 can obtain electric energy from the battery pack 20, convert the electric energy, and feed power to the AC power grid 30. When the battery pack 20 feeds power to the AC power grid 30 through the energy conversion device 10, an internal resistor of the battery pack 10 generates heat, thereby increasing the temperature of the battery pack 20. After the temperature of the battery pack 20 is increased to be greater than the temperature threshold, the controller 12 can control the inversion circuit 111 to operate in a rectification mode or control the inversion circuit 111 to be in an off-state. In the rectification mode of the inversion circuit 111, the energy conversion device 10 can obtain charging electric energy from the AC power grid 30, perform rectification, filtering, and other conversions on the electric energy, and charge the battery pack 20. In the off-state of the inversion circuit 111, at least an electrical connection between the energy conversion device 10 and the AC power grid 30 is cut off. When the inversion circuit 111 is disconnected, energy can neither be fed to the AC power grid 30 nor obtained from the AC power grid.

In an embodiment, the energy conversion circuit 11 may further include a heating circuit 112. The heating circuit 112 is at least electrically coupled to the first transmission port 101. In this embodiment, the heating circuit 112 is connected between the first transmission port 101 and the inversion circuit 111, and can have a plurality of operating modes. In different operating modes of the heating circuit 112, the energy conversion device 10 may have different energy conversion functions.

In an implementation, the controller 12 can control the heating circuit 112 to operate in a first operating mode, and the inversion circuit 111 to be in an off-state when the temperature of the battery pack 20 is less than or equal to the temperature threshold, such that the battery pack 20 can obtain the heating energy. In this embodiment, since the inversion circuit 111 is disconnected, after the heating circuit 112 in the first operating mode obtains electric energy transmitted from the battery pack 20, the electric energy cannot be transmitted to the rear inversion circuit 111 and the AC power grid 30. In this case, the heating circuit 112 may change a transmission direction or a magnitude of the electric energy, or store or release the electric energy transmitted from the battery pack 20. In the above implementation, the electric energy transmitted from the battery pack 20 to the energy conversion device 10 causes a current transmission direction to change at least twice in the heating circuit 112, such that the battery pack 20 is charged and discharged at least once. Before the temperature of the battery pack 20 reaches the temperature threshold, the heating circuit 112 may cyclically charge and discharge the battery pack 20 based on electric energy transmitted from the battery pack 20 to the energy conversion circuit 11, thereby heating the battery pack 20.

In an implementation, the controller 12 can control the heating circuit 112 to operate in a third operating mode, and the inversion circuit 111 to operate in an inversion mode when the temperature of the battery pack 20 is less than or equal to the temperature threshold, such that the energy conversion device 10 can obtain electric energy from the battery pack 10, convert the electric energy, and feed power to the AC power grid 30. The heating circuit 112 in the third operating mode can ensure that the electric energy transmitted from the battery pack 20 can be normally transmitted to the inversion circuit 111. The inversion circuit 111 at least inverts the electric energy, and feeds power to the AC power grid 30, such that the temperature of the battery pack 20 rises in a feeding process.

In an implementation, the controller 12 does not need to heat the battery pack 20 when the temperature of the battery pack 20 is greater than the temperature threshold, such that the energy conversion device 10 can normally operate. The normal operation may be understood that when the battery pack 20 and the AC power grid 30 are connected, the battery pack 20 can be charged, or when the battery pack 20 and the electric power tool are connected, the electric power tool can be powered. Exemplarily, the controller 12 may control the heating circuit 112 to operate in a second operating mode, and the inversion circuit 111 to at least operate in a rectification mode, such that electric energy input from the AC power grid 30 can charge the battery pack 20 via energy conversion. The heating circuit 112 in the second operating mode can ensure that electric energy from the inversion circuit 111 can be transmitted to the battery pack 20 to charge the battery pack 20.

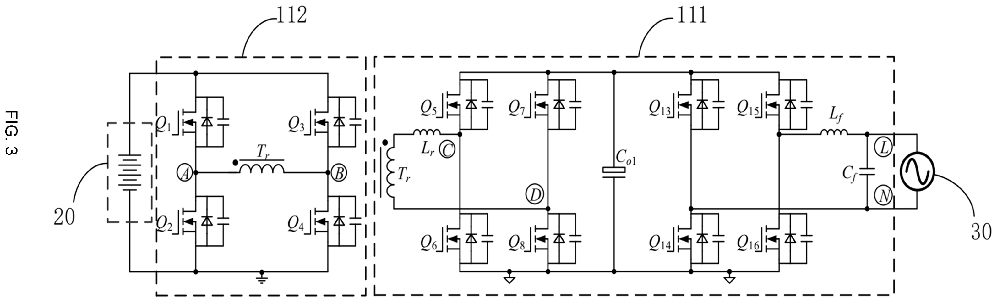

Referring to the energy conversion system 100 shown in FIG. 3, the heating circuit 112 in the energy conversion device 10 may be a bridge circuit, including at least a plurality of switching elements Q1 to Q4 and an energy storage element L. The controller 12 is connected to control terminals of the switching elements Q1 to Q4, and can control on-states of the switching elements Q1 to Q4. The energy storage element L may be an inductive element, and can at least store energy or release energy when the on-states of the switching elements Q1 to Q4 are respectively switched.

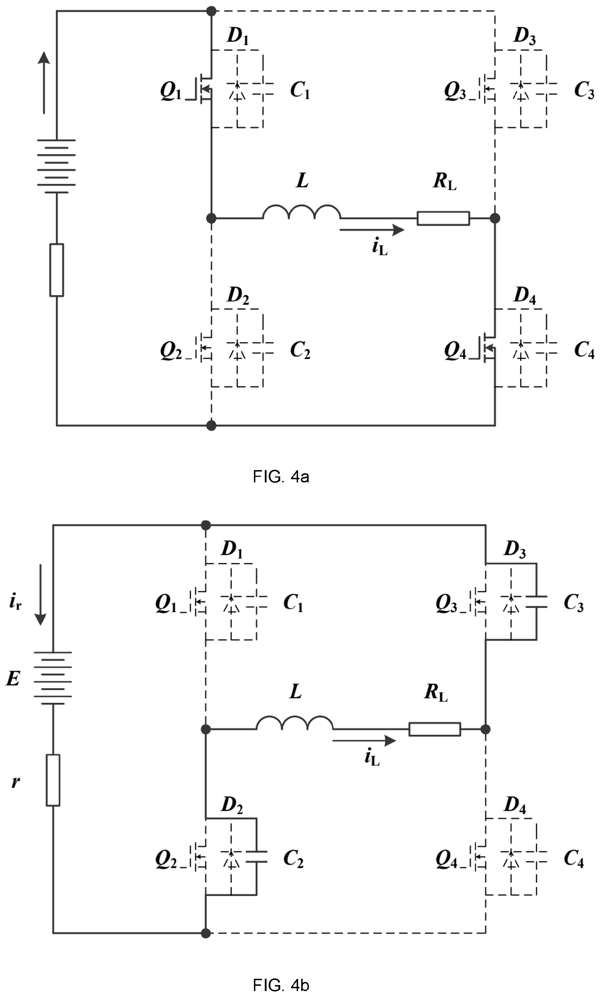

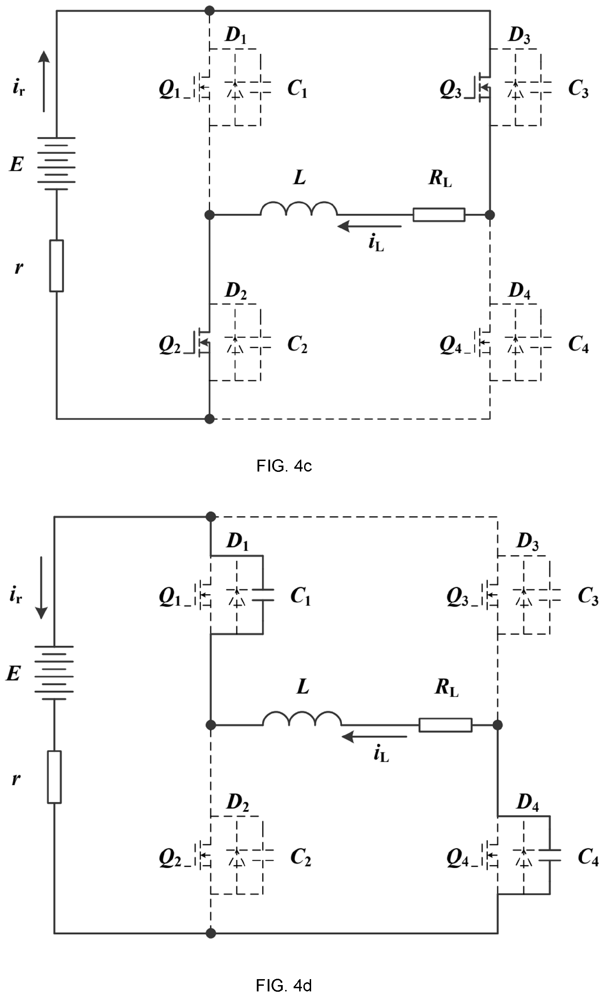

In this embodiment, the temperature of the battery pack 20 may be detected by a temperature detection module 113. When the temperature is less than or equal to the temperature threshold, such as less than or equal to 0°C, the controller 12 controls the heating circuit 112 to perform AC preheating, so as to heat the battery pack 20. The temperature detection module 113 may be a receiving module capable of receiving temperature data transmitted by the battery pack 20 in the energy conversion device 10, a detection device capable of directly detecting the temperature of the battery pack 20, or a data acquisition or storage module built in the controller 12. In this embodiment, the AC preheating process of the heating circuit 112 may refer to a process shown in FIGS. 4a to 4d:
When the controller 12 detects that the temperature of the battery pack 20 is less than or equal to the temperature threshold, as shown in FIG. 4a, the controller 12 first turns on the switching elements Q1 and Q4 in the heating circuit 112. At this time, the battery pack 20 starts to discharge, and current iL of the energy storage element L, i.e., the inductor L, rises along a direction shown in FIG. 4a. Then, as shown in FIG. 4b, the switching elements Q1 and Q4 are turned off. However, since the direction of the current iL in the inductor L cannot change abruptly, and is still maintained in the original direction, body diodes D2 and D3 of the switching elements Q2 and Q3 can be turned on, thereby achieving soft switching of the switching elements Q2 and Q3. Referring to FIG. 4c, after the switching elements Q2 and Q3 are turned on, the current iL of the inductor L can first decrease along the current direction shown in FIG. 4c, and then increases reversely after dropping to 0. Referring continuously to FIG. 4d, when the current iL in FIG. 4c increases reversely, body diodes D1 and D4 of the switching elements Q1 and Q4 can be turned on naturally, thereby achieving soft switching of the switching elements Q1 and Q4. During the AC preheating process shown in FIGS. 4a to 4b, the transmission direction of the electric energy at the first transmission port 101 connected to the battery pack 20 changes at least four times. In FIG. 4a, the battery pack 20 discharges and the inductor L stores energy. In FIG. 4b, the electric energy stored in the inductor L reversely charges the battery pack 20. After the charging electric energy gradually drops to zero, the battery pack 20 discharges again and the inductor L stores energy again. In FIG. 4d, the inductor L discharges again to charge the battery pack 20. The above process is one AC preheating process in the heating circuit 112. Generally, if the temperature of the battery pack 20 can reach the temperature threshold via at least one AC preheating process, the controller 12 controls the heating circuit 112 to exit the AC preheating. It is to be understood that during the AC preheating of the heating circuit 112, the inversion circuit 111 is in the off-state. In this embodiment, the AC preheating of the heating circuit 112 may also be understood as the above first operating mode.

In other embodiments, the heating circuit 112 may also adopt other forms of circuit structures, which are not specifically limited herein.

In some embodiments, the heating circuit 112 and the inversion circuit 111 are not strictly distinguished. That is, the heating circuit 112 and the inversion circuit 111 are merely artificial divisions made to easily distinguish functions of certain circuits. In practice, the energy conversion circuit 11 is an integrated circuit module, and internal circuits thereof may include a series resonant converter (SRC) module, an inversion module, a power factor correction (PFC) module, a resonant circuit (LLC), or the like. Different circuit modules may overlap with each other or reused. In other embodiments, the energy conversion circuit 11 may further include a totem-pole PFC, a half-bridge circuit, or a full-bridge circuit. A current control manner in the energy conversion circuit 11 may include, but is not limited to, pulse width modulation, frequency modulation, or cycle-by-cycle current limiting.

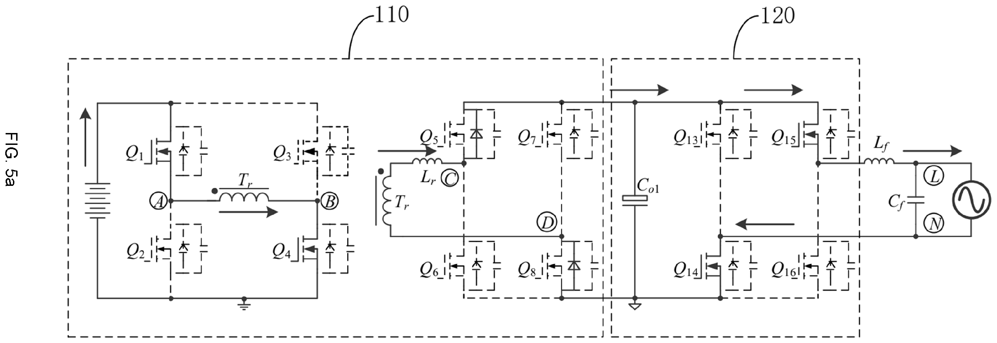

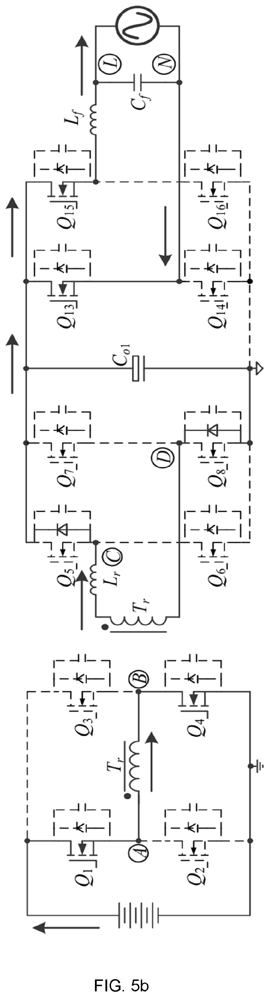

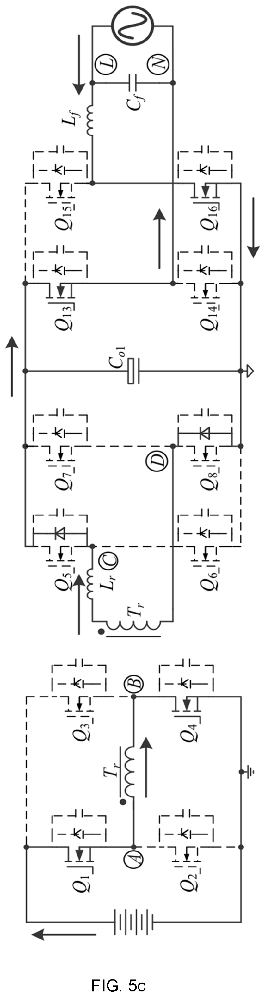

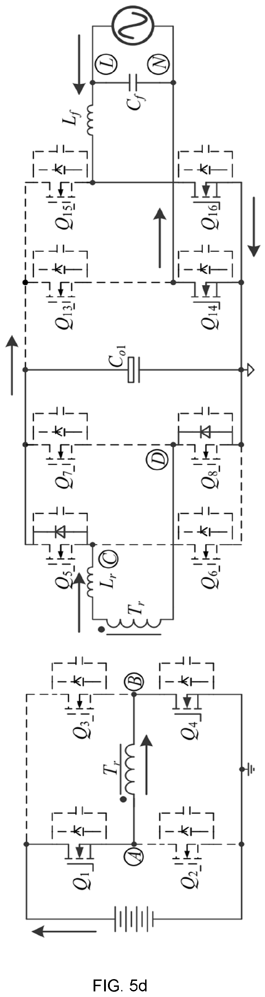

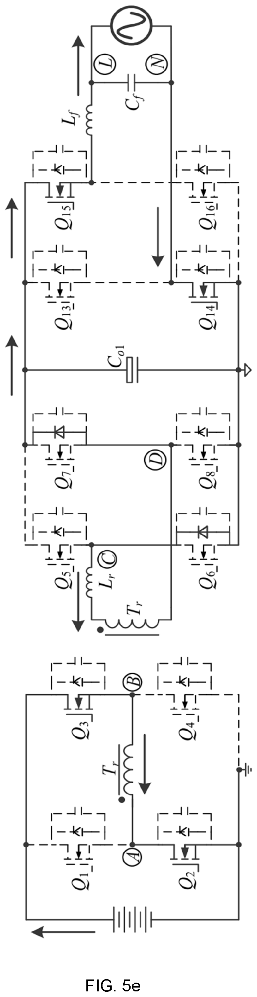

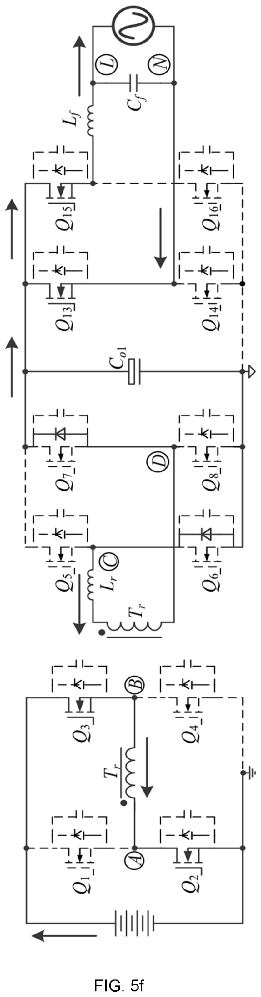

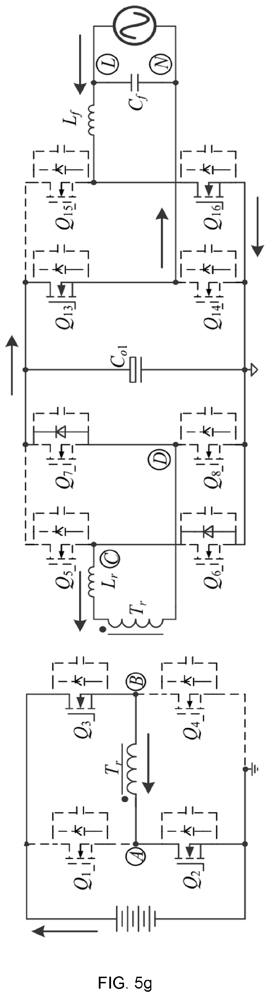

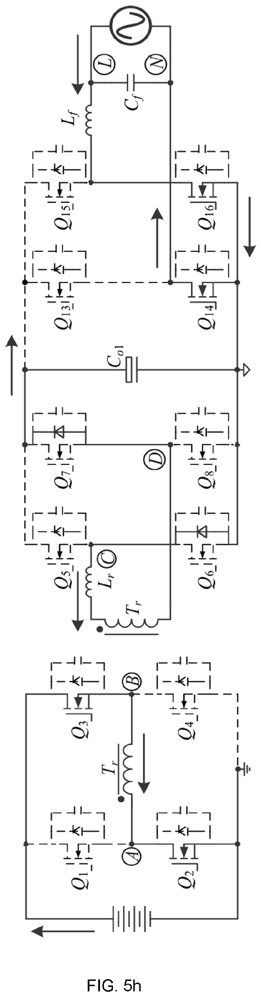

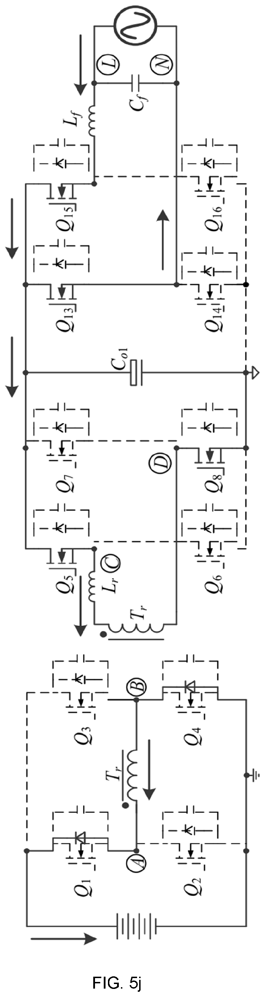

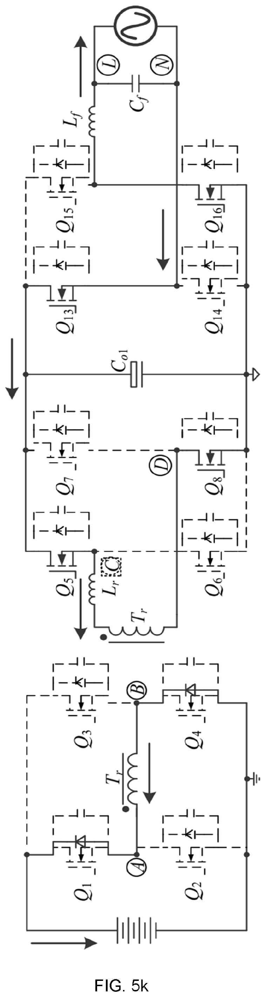

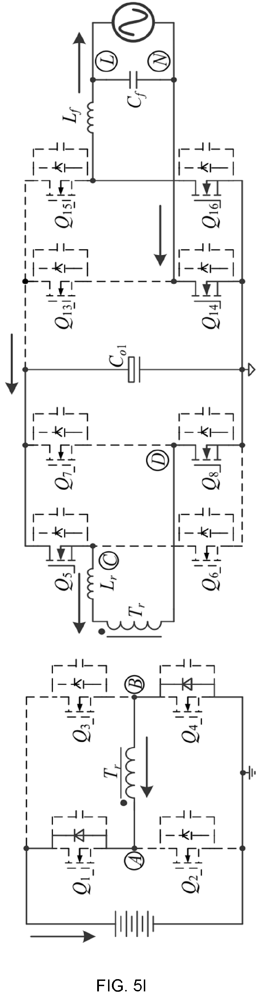

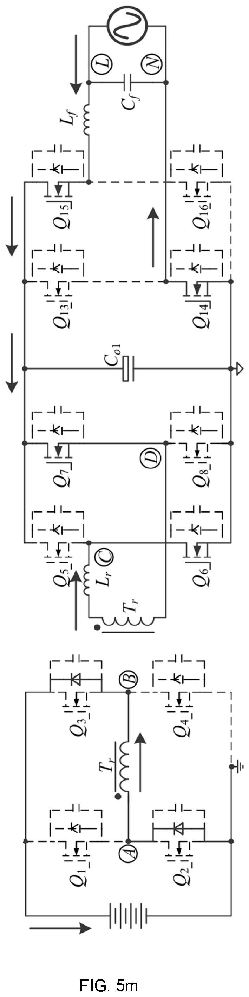

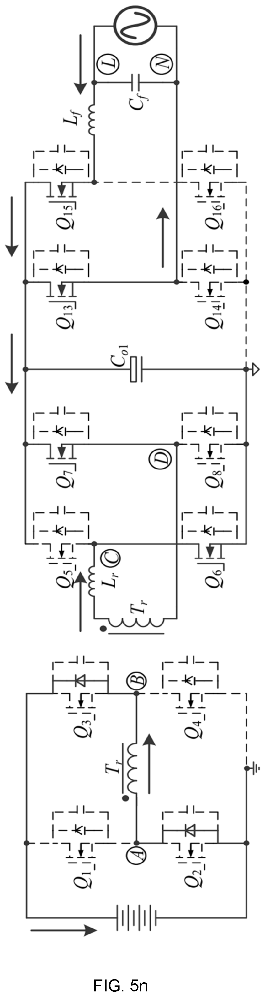

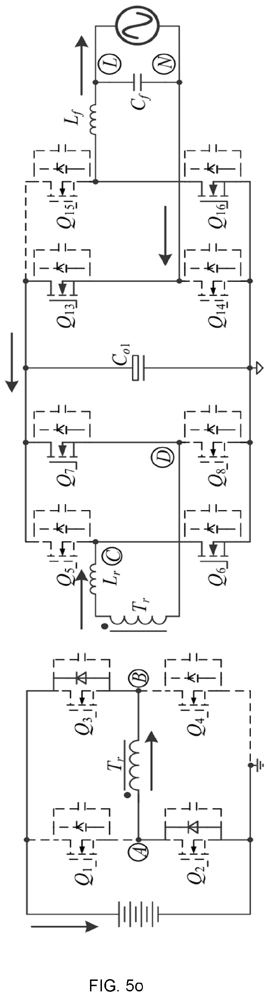

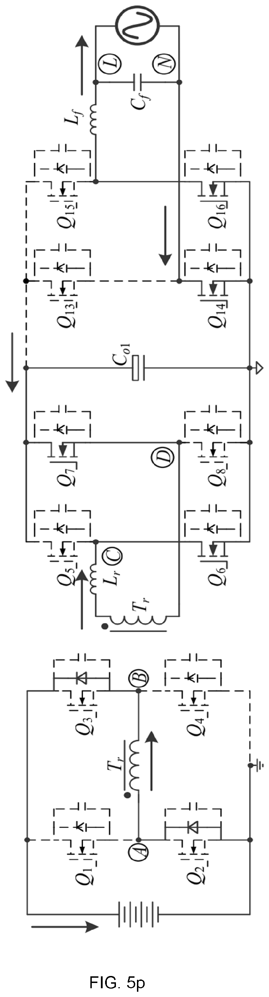

In an embodiment, FIGS. 5a to 5h show a feeding process from each circuit module in the energy conversion circuit 11 to the AC power grid 30. The energy conversion circuit 11 shown in FIG. 5a may include at least SRC circuit sub-module 110 and an inversion circuit sub-module 120. Switching transistors Q1 to Q4 on a primary side of the SRC circuit sub-module 110 perform high-frequency switching diagonally and alternately. According to a current direction, switching transistors Q5 to Q8 on a secondary side are turned on diagonally as synchronous rectifiers, or body diodes D5 to D8 are turned on diagonally and naturally. The inversion circuit sub-module 120 includes a power-frequency transistor and a high-frequency transistor that cooperate according to a control logic to generate an AC to feed back to the AC power grid 30.

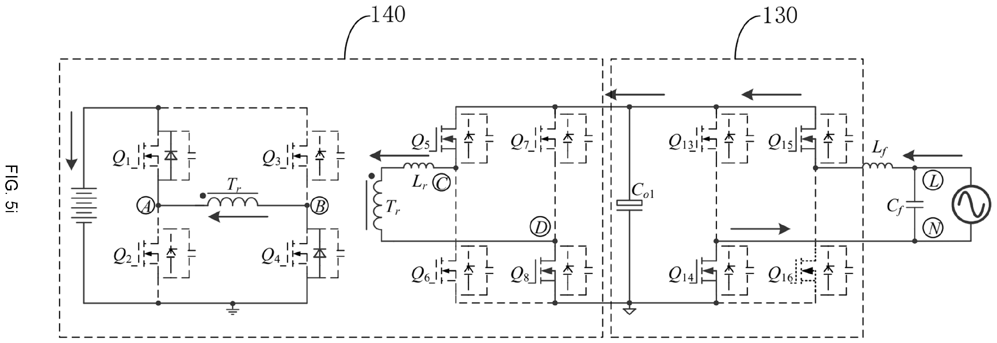

In an embodiment, FIGS. 5i to 5p show a charging process from each circuit module in the energy conversion circuit 11 to the battery pack 20. The energy conversion circuit 11 may include a PFC circuit sub-module 130 and an LLC circuit sub-module 140. The PFC circuit sub-module 130 includes a power-frequency transistor and a high-frequency transistor that cooperate according to a control logic to generate a DC high voltage. Switching transistors Q5 to Q8 on a primary side of the LLC circuit sub-module 140 perform high-frequency switching diagonally and alternately. According to a current direction, switching transistors Q1 to Q4 on a secondary side are turned on diagonally as synchronous rectifiers, or body diodes D1 to D4 are turned on diagonally and naturally, so as to convert the high voltage into a low voltage to charge the battery pack 20.

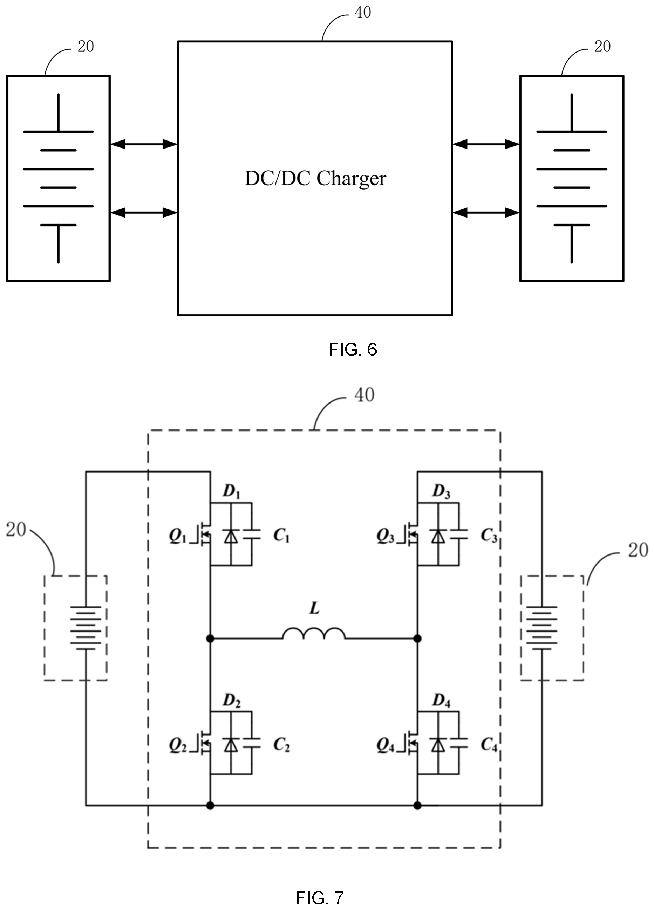

In an embodiment, a plurality of battery packs 20 may also charge each other to improve their temperatures. In an implementation, referring to FIG. 6, at least two battery packs 20 can charge each other through a DC/DC charger 40. For example, a temperature detection module capable of detecting a temperature of a battery pack 20 connected thereto is disposed in the DC/DC charger 40. When the temperature of the battery pack 20 is less than or equal to the temperature threshold, the battery pack 20 on one side of the DC/DC charger 40 may be discharged, and the battery pack 20 on another side of the DC/DC charger 40 may be charged. The above operation is reversed after a preset time, i.e., the originally charged battery pack 20 is discharged, and the originally discharged battery pack 20 is charged. By cyclically switching charge and discharge states of the two battery packs, the capacity of the battery pack 20 can be maintained substantially unchanged, while a current can flow through the two battery packs 20. Thus, heat generated by the internal resistor of the cell in the battery pack 20 can be used to increase the temperature of the battery pack 20.

In some embodiments, types of the at least two battery packs 20 connected to the DC/DC charger 40 may be the same, different, or partially different. The type of the battery pack may include a rated voltage, a capacity, energy or a discharge capability of the battery pack, or a material of the cell in the battery pack.

In some embodiments, the integrated DC/DC charger 40 may also be built into the battery pack 20. In some application scenarios, when the user perceives that the ambient temperature is very low, such as below 0°C, the two battery packs 20 may be connected together and heated by cyclically charging and discharging each other. A charge and discharge circuit is automatically disconnected after the battery packs are heated to a predetermined temperature.

In this embodiment, the charge and discharge circuit in the DC/DC charger 40 may be a four-switch Buck-Boost circuit (FSBB circuit) shown in FIG. 7. In other embodiments, the charge and discharge circuit in the DC/DC charger 40 may also be an isolated topology or a non-isolated topology. In this embodiment, the control of the FSBB circuit includes, but is not limited to, single-mode control, dual-mode control, and hybrid single-mode control. The current control manner of the FSBB circuit is not limited to pulse width modulation, frequency modulation, and cycle-by-cycle current limiting.

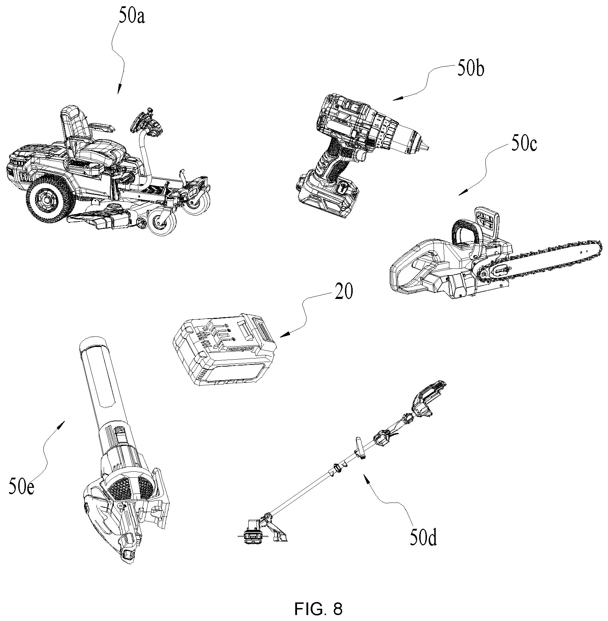

In the present disclosure, the battery pack in the energy conversion system is adapted to various types of electric power tools. As shown in FIG. 8, the electric power tools 50 may include a riding lawn mower 50a, a hand-held electric drill 50b, a chainsaw 50c, a grass trimmer 50d, and a blower 50e. The electric power tool may be a hand-held power tool, such as a drill, a pruner, and a sander. Alternatively, the electric power tool may further be a table tool such as a table saw and a miter saw. Alternatively, the electric power tool may further be a hand-push power tool such as a hand-push lawn mower and a hand-push snow sweeper. Alternatively, the electric power tool may further be a riding power tool such as a riding lawn mower, a riding vehicle, and an all-terrain vehicle. Alternatively, the electric power tool may further be a robotic tool, such as a robotic mower and a robotic snow sweeper. In some embodiments, the electric power tool may be an electric drill, an electric lamp, an electrocar, etc. In some embodiments, the electric power tool may further be a gardening tool such as a pruner, a blower, a lawn mower, and a chainsaw. Alternatively, the electric power tool may further be a decoration tool such as a screwdriver, a nail gun, a circular saw, and a sander. In some embodiments, the electric power tool may further be a vegetation care tool, such as a grass trimmer, a lawn mower, a pruner, and a chainsaw. Alternatively, the electric power tool may further be a cleaning tool, such as a blower, a snow sweeper, and a cleaner. Alternatively, the electric power tool may further be a drilling tool such as a drill, a screwdriver, a wrench, and an electric hammer. Alternatively, the electric power tool may further be a sawing tool such as a reciprocating saw, a jig saw, and a circular saw. Alternatively, the electric power tool may further be a table tool such as a table saw, a miter saw, a metal cutter, and an electric router. Alternatively, the electric power tool may further be a grinding tool, such as an angle grinder and a sander. Alternatively, the electric power tool may further be other tools such as a lamp and a fan. Certainly, the load may also include other types of household electrical devices.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An energy conversion device, comprising at least:
a first transmission port that comprises a battery connection terminal adapted to be connected to a battery pack;
a second transmission port configured to be at least connected to an alternating-current (AC) power grid;
an energy conversion circuit configured to at least convert electric energy input from the first transmission port and then feed power to the second transmission port; and
a controller at least in communication with the first transmission port, and electrically connected to the energy conversion circuit;
wherein the controller is configured to:
at least control, when a temperature of the battery pack is less than or equal to a temperature threshold, the energy conversion circuit to convert the electric energy input from the first transmission port, such that the battery pack obtains at least heating energy.

2. The energy conversion device according to claim 1, wherein the energy conversion circuit comprises: an inversion circuit configured to at least invert the electric energy input from the first transmission port and feed power to the AC power grid when the temperature of the battery pack is less than or equal to the temperature threshold.

3. The energy conversion device according to claim 2, wherein the inversion circuit is further configured to convert electric energy input from the second transmission port and then charge the battery pack.

4. The energy conversion device according to claim 2, wherein the controller is configured to control the inversion circuit to operate in an inversion mode when the temperature of the battery pack is less than or equal to the temperature threshold.

5. The energy conversion device according to claim 2, wherein the controller is configured to control the inversion circuit to operate in a rectification mode or control the inversion circuit to be in an off-state when the temperature of the battery pack is increased to be greater than the temperature threshold.

6. The energy conversion device according to claim 1, wherein the energy conversion circuit comprises: a heating circuit at least electrically coupled to the first transmission port; and the controller is configured to control the heating circuit to operate in a first operating mode when the temperature of the battery pack is less than or equal to the temperature threshold, such that the battery pack obtains at least the heating energy.

7. The energy conversion device according to claim 6, wherein the heating circuit comprises a plurality of switching elements; and the controller is configured to change conducting states of the plurality of switching elements in the first operating mode, so as to change a transmission direction of electric energy at the first transmission port at least twice.

8. The energy conversion device according to claim 6, wherein the heating circuit further comprises an energy storage element; and the energy storage element is configured to store electric energy released by the battery pack, and transmit the stored electric energy to the battery pack.

9. The energy conversion device according to claim 8, wherein the energy storage element comprises an inductive element.

10. The energy conversion device according to claim 1, wherein the controller is configured to at least control, when the temperature of the battery pack is greater than the temperature threshold, the energy conversion circuit to convert electric energy input from the second transmission port, so as to charge the battery pack.

11. The energy conversion device according to claim 6, wherein the controller is configured to control the heating circuit to operate in a second operating mode when the temperature of the battery pack is greater than the temperature threshold, such that the battery pack obtains charging electric energy.

12. An energy conversion system, comprising: a battery pack, an alternating-current (AC) power grid, and an energy conversion device, wherein
the battery pack is coupled to an electric power tool to supply power to the electric power tool;
the energy conversion device is connected to the battery pack and the AC power grid, convert electric energy input from the battery pack, and feed power to the AC power grid; and
when a temperature of the battery pack is less than or equal to a temperature threshold, the energy conversion device converts the electric energy input from the battery pack, such that the battery pack obtains at least heating energy.

13. The energy conversion system according to claim 12, wherein when the temperature of the battery pack is less than or equal to the temperature threshold, the energy conversion device converts the electric energy input from the battery pack and then feeds power to the AC power grid, such that the battery pack obtains the heating energy.

14. The energy conversion system according to claim 12, wherein when the temperature of the battery pack is less than or equal to the temperature threshold, the energy conversion device changes a transmission direction of electric energy between the battery pack and the energy conversion device at least twice, such that the battery pack obtains the heating energy.

15. An inversion device, comprising at least:
a first transmission port that comprises a battery connection terminal adapted to be connected to a battery pack;
a second transmission port configured to be at least connected to an alternating-current (AC) power grid;
an inversion circuit disposed between the first transmission port and the second transmission port, and has a plurality of operating modes;
a heating circuit disposed between the first transmission port and the inversion circuit, and has a plurality of operating modes; and
a controller at least electrically connected to the inversion circuit and the heating circuit;
wherein the controller is configured to:
control, when a temperature of the battery pack is less than or equal to a temperature threshold, the inversion circuit and/or the heating circuit to convert electric energy input from the first transmission port, such that the battery pack obtains at least heating energy.

16. The inversion device according to claim 15, wherein when the temperature of the battery pack is less than or equal to the temperature threshold, the heating circuit operates in a first operating mode, and the inversion circuit is in an off-state, such that the battery pack obtains the heating energy.

17. The inversion device according to claim 15, wherein when the temperature of the battery pack is greater than the temperature threshold, the heating circuit operates in a second operating mode, and the inversion circuit has at least a rectification mode, such that the battery pack obtains charging electric energy.

18. The inversion device according to claim 15, wherein when the temperature of the battery pack is less than or equal to the temperature threshold, the heating circuit operates in a third operating mode, and the inversion circuit has at least an inversion mode, such that the battery pack feeds power to the AC power grid.

19. The inversion device according to claim 15, wherein when the temperature of the battery pack is less than or equal to the temperature threshold, the inversion circuit operates in an inversion mode.

20. The inversion device according to claim 15, wherein when the temperature of the battery pack is increased to be greater than the temperature threshold, the inversion circuit operates in a rectification mode or is in an off-state.
